# EUROPÄISCHE PATENTSCHRIFT

(11) **EP 3 324 040 B1**
(45) Veröffentlichungstag und Bekanntmachung des Hinweises auf die Patenterteilung: **23.06.2021**
(21) Anmeldenummer: 17191514.3
(22) Anmeldetag: 18.09.2017
(51) Int. Cl.: F03D 1/06, F03D 80/00

(54) **ROTORBLATTVERSTELLUNG**
ROTOR BLADE ADJUSTMENT
PAS DE PALE

(30) Priorität: 18.11.2016 DE 102016222748
(43) Veröffentlichungstag der Anmeldung: 23.05.2018
(73) Patentinhaber: ContiTech Antriebssysteme GmbH, 30165 Hannover (DE)
(72) Erfinder: Göser, Hubert, 29451 Dannenberg (DE); Kucharczyk, Andre, 29499 Gülden (DE)
(74) Vertreter: Continental Corporation

(56) Entgegenhaltungen:
- DE-A1-102008 013 926
- DE-A1-102013 206 878

## Beschreibung

Die Erfindung betrifft eine Einrichtung zur Rotorblattverstellung an einer Windkraftanlage, bei der die Verstellung eines drehbar gelagerten Rotorblattes über einen Zugriementrieb erfolgt, bei dem ein einteiliger Zugriemen mindestens eine mit einem Antriebsmotor verbundene Antriebsscheibe umschlingt und mit dem Fuß bzw. Schaft des Rotorblattes so in einer Wirkverbindung steht, dass ein zur Verstellung des Rotorblattes erforderliches Drehmoment vom Antriebsmotor auf den Schaft und damit auf das Rotorblatt übertragbar ist.

Die Erzeugung von elektrischer Energie durch Windkraftanlagen ist dann besonders effektiv, wenn die Windkraftanlage bzw. der Generator im Bereich ihrer Nennleistung arbeiten kann. Bei unterschiedlichen Windgeschwindigkeiten ist dies dann effizient und materialschonend für die gesamte Anlage, wenn die Drehzahl des Rotors trotz schwankender Windstärken annähernd konstant gehalten wird. Die exakte Leistungsregelung ist daher für den gleichmäßigen Lauf des Generators besonders wichtig. Eine Regelung der Leistungsaufnahme geschieht heute in aller Regel durch Verdrehen der Rotorblätter. Die Rotorblätter werden durch einen Blattverstellantrieb, die so genannte Rotorblattverstellung, in unterschiedliche Positionen in Relation zur Anströmung durch den Wind gebracht.

Bei schwachem Wind werden die Rotorblätter etwa so eingestellt, dass das Rotorblattprofil mit einem großen Anstellwinkel, d.h. mit nahezu voller Breite gegen die Strömung steht. Bei auffrischendem Wind wird dann der Anstellwinkel zunehmend reduziert, bis bei Sturm die Blätter parallel zur Windströmung gerichtet werden (Fahnenstellung) und der Rotor im Extremfall stoppt und sich nicht mehr dreht. Die Rotorblattverstellung ist daher eines der wichtigsten Regelsysteme einer modernen Windenergieanlage. Die Regelung der Verstellung wird auch als "Pitch-Regelung" bezeichnet. Für den Verstellmechanismus als solchen existieren unterschiedliche elektrische und hydraulische Systeme, nämlich elektromechanische Verstelleinrichtungen mit Zahnradantrieben/Stirnradgetrieben, hydraulische Verstelleinrichtungen mit Zylinder, oft für jedes einzelne Rotorblatt, ebenso wie die bei der hier vorliegenden Erfindung betroffene Verstelleinrichtung der Rotorblätter über einen Zugmittelantrieb.

Abhängig von den einzelnen Systemen ist eine Blattverstellung um bis zu 180 Grad um die senkrecht zur Drehachse gelegene Rotorlängsachse möglich, wodurch die Rotorblätter in einem Bereich verschwenkt werden können, der von ihrer Maximalleistung bis zur "Fahnenstellung" oder Bremsung reicht.

Die heute zur Verstellung noch dominierenden Stirnradlösungen erfordern einen relativ hohen Wartungsaufwand, da u.a. der Schmierfilm im Zahneingriff erhalten werden muss, d.h. dass in regelmäßigen Abständen nachgefettet werden muss.

Diesen Nachteil vermeidet eine Verstelleinrichtung der Rotorblätter über einen als Zahnriementrieb ausgebildeten Zugmittelantrieb. Bei einer solchen Verstelleinrichtung läuft ein Zahnriemen kämmend über eine mit einem Antriebsmotor verbundene Antriebsscheibe und weiter über einen am Fuße des Rotorblattes angebrachten Zahnkranz. Durch die über den Zahnriemen am Zahnkranzumfang angreifende Radialkraft kann dann das Rotorblatt stufenlos in beliebiger Weise verdreht werden.

Die DE 42 21 783 A1 offenbart eine Vorrichtung zur Verstellung von Rotorblättern, bei dem ein zusätzliches zur aerodynamischen Abbremsung des Rotors wirkendes Bremssystem vorgesehen ist, welches bei Ausfall oder Störung des Blattverstellmechanismus eine zusätzliche Bremsvorrichtung bereitstellt. Dies wird erreicht durch ein an der Nabe befestigtes Verteilergetriebe, das ein Zentralrad enthält, das mit einer Bremsscheibe verbunden ist. Das Zentralrad kann mittels einer nicht mit der Rotornabe drehenden Bremszange festgebremst werden, so dass die Rotorblätter im Störfall sicher in die Fahnenstellung geschwenkt werden. Unter anderem ist hierzu auch eine getriebeausgangsseitige Verstellung der Rotorblätter mit einem Zugmitteltrieb/Zahnriementrieb offenbart.

Die DE 10 2008 013 926 A1 offenbart eine Vorrichtung zur Verstellung des Anstellwinkel eines Rotorblattes einer Windenergieanlage mit einem als Zahnriemen oder auch als Kette ausgebildeten so genannten Hülltriebstrang. In der Ausbildung als Zahnriemen umgreift der Hülltriebstrang ein mit einer Außenverzahnung versehenes Antriebsrad und einen mit einer Außenverzahnung versehenen Drehlagerring am nabenseitigen Ende des Rotorblattes.

Da die Leistung von Windkraftanlagen immer höher wird, kommen die an sich sehr gut für diese Aufgaben geeigneten Verstelleinrichtungen mit Zahnriemen langsam an ihre Grenzen. Sowohl die hohe Zahnbelastung/Zahnfußbelastung als auch die Zugbelastung, die durch die erforderliche Vorspannung noch verstärkt wird, sind nur noch mit überdimensionalen Breiten der Zahnriemen zu realisieren. Auch die durch die üblichen rückenseitig anliegenden Spannrollen entstehende Gegenbiegung in den Zahnriemen erhöht deren Belastung.

Auch wenn, wie z.B. in der DE 10 2008 013 926 A1 ebenfalls offenbart, zur Übertragung großer Kräfte der Hülltriebstrang auch aus mehreren zueinander parallelen Riemen bestehen kann oder Verstärkungsmaterialien aus Carbon vorgesehen sind, ist eine allein Materialverstärkung oder Vervielfältigung enthaltende Lösung nicht immer zufriedenstellend.

Die DE 10 2013 206 878 A1 offenbart eine Vorrichtung zur Verstellung eines Rotorblattes einer Windturbine, wobei die Vorrichtung innerhalb der Nabe angeordnet ist. Die Verstellung erfolgt auch dort über einen Riementrieb. Eine der dort offenbarten Ausführungsformen zeigt zwei Riemen, die jeweils mit einem ihrer Enden an einem mit dem Schaft des Rotorblatts verbundenen Antriebsflansch befestigt sind und deren anderes Ende durch einen Antrieb aufgewickelt wird. Bei hohen zu übertragenden Kräfte ist jedoch die Anbindung bzw. die Befestigung am Antriebsflansch bzw. am Schaft des Rotorblattes nicht ganz unproblematisch. Auch ist dort eine Lösung offenbart, bei der mehrere, d.h. mindestens zwei Riemen über einen Flaschenzug geführt werden und an feststehenden Teilen der Nabe mit ihren Enden befestigt sind. Dadurch ergibt sich jedoch eine recht komplizierte Bauform. Im Übrigen sind bei einer innerhalb der Nabe angeordneten Verstellung eines Rotorblattes die sich ergebenden Hebelverhältnissse ungünstiger, wodurch die aufzuwendenden Kräfte bzw. die Zugkräfte auf Riementriebe sehr hoch werden können.

Für die Erfindung bestand also die Aufgabe, ein System bzw. eine Einrichtung zur Rotorblattverstellung an Windkraftanlagen bereitzustellen, die innerhalb des zur Verfügung stehenden Bauraums große Stellkräfte mit Zugmitteltrieben übertragen bzw. auch bei großen Stellkräfte die Zugkräfte innerhalb der Zugmittelantriebe reduzieren kann, so dass eine hohe Lebensdauer der Riemen erreicht wird.

Gelöst wird diese Aufgabe durch die Merkmale des Hauptanspruchs. Weitere vorteilhafte Ausbildungen sind in den Unteransprüchen offenbart.

Dabei ist der Zugriemen zwischen dem Umschlingungsbereich an der Antriebsscheibe und seiner Wirkverbindung mit dem Fuß bzw. Schaft des Rotorblattes in Form eines Flaschenzugs über Flaschenzugsrollen geführt und als Endlosriemen ausgebildet an einem feststehenden und nicht mit dem Rotorblatt oder dem Schaft drehbaren Teil der Rotorblattlagerung bzw. Rotornabe befestigt.

Durch die Ausbildung eines solchen Flaschenzugs innerhalb des Riementriebs lassen sich sehr hohe, nämlich bei einer Flasche mit einer Rolle doppelte Zugkräfte mit dem Riemen übertragen, so dass steigende Drehmomente bei der Rotorblattverstellung kein Problem mehr darstellen. Umgekehrt lassen sich bei einer Auslegung auf vorbestimmte Zugkräfte auch die Riemenbreite und damit die Baubreite halbieren. Die üblicherweise bei Zugriemen typische hohe Vorspannung ist nicht mehr so relevant für die Zugkraft, die für die Übertragung des Drehmoments nötig ist.

Der Fuß bzw. Schaft des Rotorblattes kann hierzu in einem axialen Teilbereich besonders zur Aufnahme des Zugriemens/Riementrums ausgebildet sein, beispielsweise durch eine entsprechenden Oberflächenausbildung oder -profilierung oder auch durch Führungsscheiben, Flansche oder Wellenabsätze.

Eine weitere vorteilhafte Ausbildung besteht darin, dass die mindestens eine Flaschenzugrolle am Fuß bzw. Schaft des Rotorblattes gelagert ist, also auf dem verstellbaren oder drehbaren Teil des Rotorblattes. Die Flaschenzugrolle und deren Lagerung "dreht mit" und bildet so eine sehr klein bauende Konstruktion, die einfach innerhalb der Nabe platziert werden kann.

Eine weitere vorteilhafte Ausbildung besteht darin, dass die Wirkverbindung zwischen Zugriemen und Fuß bzw. Schaft des Rotorblattes dadurch ausgebildet ist, dass der Zugriemen im Schaft drehbar gelagerte Rollen umläuft und ein Drehmomet über die Rollenachse auf den Schaft überträgt. Damit ist allein die Zugkraft ausschlaggebend für die Drehmomentübertragung, d.h., dass eine auf Auslegung auf ausreichender Reibschluss dann nicht unbedingt erforderlich ist. Hierdurch ergeben sich in besonders engen Bauräumen Vorteile.

Eine weitere vorteilhafte Ausbildung zur Verbesserung der Positioniergenauigkeit bei gleichzeitig hoher übertragbarer Kraft besteht darin, dass der Zugriemen mit einer Zahnung versehen, also als Zahnriemen ausgebildet ist. Dabei ist natürlich die Antriebsscheibe außen ebenfalls mit einer zum Zahnriemen komplementären Verzahnung versehen.

Eine weitere vorteilhafte Ausbildung zur Verringerung der Baugröße bei nahezu gleich bleibender übertragbarer Kraft besteht darin, dass der Zugriemen als Flachriemen oder als mindestens einseitig profilierter Flachriemen ausgebildet ist, wobei der Zugriemens die Antriebsscheibe reibschlüssig umschlingt. Bei einer solchen Lösung entfallen auch umfangreiche Bearbeitungen von Antriebsscheiben durch etwaige Verzahnung und Profilierung. Unter einer üblichen Vorspannung und einem Umschlingungswinkel von in der Regel größer als 100° ergibt sich eine ausreichende Normal- und Reibkraft und somit ohne die Notwendigkeit zusätzlicher Spannrollen ein ausreichender Reibschluss, der für den Antrieb der meisten Rotorblattverstellungen völlig ausreicht.

Erfindungsgemäß ist der Zugriemen als Endlosriemen ausgebildet. Da natürlich die Herstellungslänge von Endlosriemen je nach Herstellungsverfahren begrenzt ist, ist eine solche Ausbildung eher bei kleineren Windradanlagen möglich, weist aber dann die nachfolgend beschriebenen Vorteile auf. Durch die Verwendung eines solchen Endlosriemens kann man nämlich auf die bei Einzelzugriemen aus dem Stand der Technik üblicherweise nötigen Klemmungen zur mechanischen Verbindung mit dem Schaft grundsätzlich verzichten. Damit besteht auch nicht mehr die Gefahr, dass sich bei übergroßen Zugkräften im Zugmittel vorhandene Verstärkungselemente durch Scherkräften lösen oder von der vom Grundkörper trennen könnten. Durch Anwendung des erfindungsgemäßen Prinzips der Flaschenzugführung und wechselseitigen Anlage an Antriebsscheibe und Abtriebsscheibe (Schaft des Rotors) auf Endlosriemen sowie durch die sich ergebenden relativ großen Umschlingungswinkel lassen sich große Kräfte übertragen bei gleichzeitig langer Lebensdauer des Riemens. Damit es je nach erforderlichem Dreh-oder Schwenkwinkel des Rotorblattes bei der erfindungsgemäßen Flaschenzug-Lösung nicht vorkommen kann, dass die eine Flaschenzugsrolle umlaufenden und damit im Flaschenzug gegenläufigen Teile, also die in eine Rolle einlaufende und aus derselben Rolle oder einer andern Rolle auslaufende Teile des endlosen Zugriementrums sich einander nähern und sich letztlich berühren, was natürlich zur Reibung und damit auch zu einem gewissen Verschleiß führen könnte, besteht eine weitere vorteilhafte Ausbildung darin, bei der die eine Flaschenzugsrolle umlaufenden im Flaschenzug gegenläufigen Teile des Zugriementrums durch Abstandshalter getrennt werden, vorzugweise durch Gleitschienen oder Rollen, an denen die gegenüber liegenden Seiten des Zugriementrums gegenläufig bewegbar gleitend oder abrollend anliegen.

In einer weiteren vorteilhafte Ausbildung ist der Zugriemen mindestens einseitig mit einer gleitfähigen Auflage versehen, insbesondere so ausgebildet, dass der Zugriemen einseitig eine Gewebelage als gleitfähige Auflage aufweist, vorzugsweise eine mit einer Polyethylenfolie beschichtete Gewebelage. Das beeinflusst die Reibungs- und Eingriffsverhältnisse in der Umschlingung günstig und vermeidet Erwärmung durch zu starke Reibung.

Bei der erfindungsgemäßen Einrichtung kommt es natürlich besonders auch auf das Zugmittel an, was in besonderer Weise zur Verwendung in diesem Riementrieb zur Rotorblattverstellung angepasst werden muss. Insofern ist es vorteilhaft, wenn der Zugriemen aus im Wesentlichen aus einem elastomeren Material, vorzugsweise aus Polyurethan ausgebildet ist und als Zugträger Corde aufweist, deren Corddurchmesser b im Verhältnis zum Kerndurchmesser D der kleinsten im Zugriementrieb vorhandenen Umlenkrolle, Abstandsrolle, Antriebswelle oder -scheibe der Ungleichung D ≥ 40 b genügt.

Als Kerndurchmesser einer Antriebswelle oder -scheibe wird hier der Durchmesser bezeichnet, der die erste Wicklung des Zugmittels/Zugriemens aufnimmt, also der Außendurchmessser des Wellengrundes der Welle bzw. des Scheibengrundes einer Scheibe, ohne Berücksichtigung etwaiger Führungs- oder Bordscheiben. Sinngemäß gilt dasselbe für eine Umlenkrolle, natürlich ohne dass hier eine Wicklung erfolgt. Unter Berücksichtigung der oben genannten Ungleichung ergibt sich für den Zugriemen auch bei hoher Belastung bzw. einem hohen Lastkollektiv eine ausreichend hohe Lebensdauer, so dass diesbezüglich lange Wartungsintervalle möglich sind.

Diese Maßgabe gilt für die Antriebsscheibe bzw. -welle natürlich auch dann, wenn deren Mindestdurchmesser / Kerndurchmesser zwar etwas kleiner ausgebildet, aber immer eine oder einige Windungen des Zugmittels permanent auf der Scheibe aufgelegt bleiben und nicht mehr abgewickelt werden. Diese untersten Windungen oder Wicklungen sind sozusagen als Grundwindungen immer vorhanden und vergrößern den im Betrieb wirksamen Kerndurchmesser D.

Die Zugträger sollten dabei möglichst als Corde aus Stahl und als Litzenkonstruktion ausgebildet sein und die Zwischenräume der Litzenkonstruktion zu mindestens 60%, vorzugsweise zu mindestens 80% mit elastomerem Material ausgefüllt sein.

Anhand eines Ausführungsbeispiels soll die Erfindung näher erläutert werden. Es zeigen
- Fig. 1: prinzipiell eine Windkraftanlage mit verstellbaren Rotoren,
- Fig. 2: eine Einrichtung zur Rotorblattverstellung einer Windkraftanlage, die nicht zur Erfindung gehört,
- Fig. 3: eine erfindungsgemäße Einrichtung zur Rotorblattverstellung einer Windkraftanlage als Prinzipskizze,
- Fig. 4: eine Einrichtung zur Rotorblattverstellung aus dem Stand der Technik als Prinzipskizze.

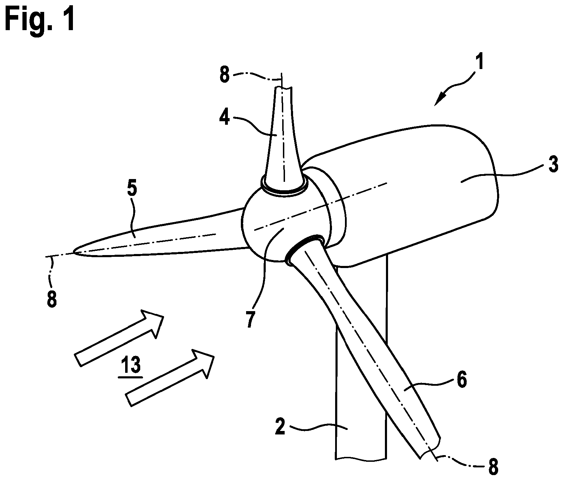

Fig. 1 zeigt prinzipiell eine Windkraftanlage 1 mit einem auf einem Turm 2 befestigten Generatorgehäuse 3. Die Windkraftanlage weist einen dreiblättrigen Rotor auf mit den Blättern 4, 5 und 6, die in der Nabe 7 gelagert und alle in ihrer Anstellung zum anströmenden Wind 13 verstellbar sind, d.h. um ihre Längsachsen 8 drehbar ausgebildet und dadurch mit einer Rotorblattverstellung ausgerüstet sind.

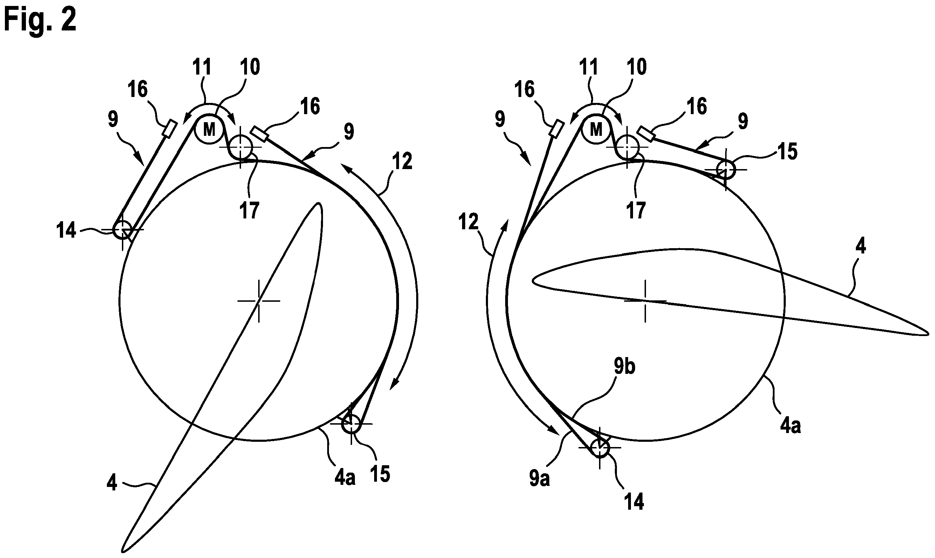

Fig, 2 zeigt eine nicht zur Erfindung gehörige Einrichtung zur Rotorblattverstellung beispielsweise am Rotorblatt 4 dieser Windkraftanlage, in Richtung der Blattlängsachse 8 gesehen, wobei das Rotorblatt 4 im linken und rechten Teil der Fig. 2 in zwei verschiedenen Stellungen dargestellt ist. Die Verstellung des drehbar gelagerten Rotorblattes 4 erfolgt über einen Zugriementrieb, bei dem ein einteiliger Zugriemen 9 die mit einem Antriebsmotor verbundene Antriebsscheibe 10 umschlingt, nämlich über den Umschlingungsbereich 11, und mit dem Fuß bzw. Schaft des Rotorblattes 4a so in einer Wirkverbindung steht, dass ein zur Verstellung des Rotorblattes erforderliches Drehmoment vom Antriebsmotor auf den Schaft und damit auf das Rotorblatt übertragbar ist. Die Wirkverbindung zwischen Zugriemen 9 und Schaft des Rotorblattes 4a ist hier als eine reibschlüssige Umschlingung ausgebildet, bei der der Zugriemen den Fuß bzw. Schaft des Rotorblattes 4a auf einem Teilumfang 12 so umschlingt, dass ein zur Verstellung des Rotorblattes erforderliches Drehmoment auf den Schaft übertragbar ist.

Der Zugriemen 9 ist in Form eines Flaschenzugs über Flaschenzugsrollen 14, 15 geführt und an seinen beiden Enden mit einer Klemmung 16 an einem feststehenden Teil im Gehäuse der Rotornabe befestigt, was hier jedoch nicht weiter detailliert dargestellt ist. Die Klemmungen sind hier allerdings federnd gestaltet, so dass eine gewisse Längentoleranz vorhanden ist, in der sich das Riemenende federnd gespannt hin und her bewegen kann.

Der Zugriemen ist hier als Flachriemen ausgebildet. Dabei sind die jeweils eine Flaschenzugsrolle umlaufenden und im Flaschenzug gegenläufigen und über Teillängen einander berührende Teile 9a, 9b des Zugriemens 9 auf ihren aufeinander gleitenden Oberflächen mit einer gleitfähige Auflage aus einer mit Polyethylen beschichtete Gewebelage versehen.

Der Zugriementrieb weist eine zusätzliche Umlenk- und Spannrolle 17 auf, durch die der Zugriemen 9 sicher und ausreichend gespannt wird.

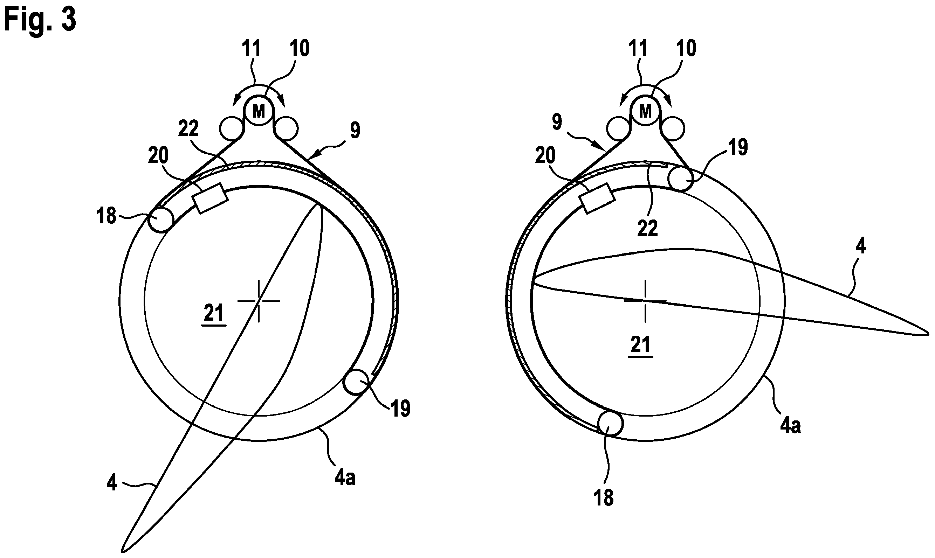

Fig. 3 zeigt eine Ausführung der erfindungsgemäße Einrichtung zur Rotorblattverstellung, wobei ebenfalls das Rotorblatt 4 im linken und rechten Teil der Fig. 3 in zwei verschiedenen Stellungen dargestellt ist. Auch hier erfolgt die Verstellung des drehbar gelagerten Rotorblattes 4 über einen Zugriementrieb, bei dem ein einteiliger und hier als Endlosriemen ausgebildeter Zugriemen 9 die mit einem Antriebsmotor verbundene Antriebsscheibe 10 umschlingt, nämlich über den Umschlingungsbereich 11, und mit dem Fuß bzw. Schaft des Rotorblattes 4a so in einer Wirkverbindung steht, dass ein zur Verstellung des Rotorblattes erforderliches Drehmoment vom Antriebsmotor auf den Schaft und damit auf das Rotorblatt übertragbar ist. Die Wirkverbindung zwischen Zugriemen 9 und Schaft des Rotorblattes 4a ist hier jedoch dadurch ausgebildet, dass der Zugriemen die im Schaft drehbar gelagerten Umlenkrollen bzw. Flaschenzugrollen 18 und 19 umläuft und ein Drehmoment über die jeweiligen Rollenachsen auf den Schaft 4a überträgt.

Hierzu ist der Zugriemen 9 mit einer Klemmung 20 in der Rotornabe an der nicht mit dem Rotorblatt drehbaren Rotorblattachse 21 befestigt. Der durch die Antriebsscheibe 10 angetriebene Zugriemen wird von einer mit dem drehbaren Schaft 4a des Rotorblattes verbundenen und damit ebenfalls drehbaren Gleitschiene 22 unterstützt, die sich je nach Stellung bzw. Drehung des Schafts unter den Zugriemen schiebt.

An den beiden Enden der Gleitscheine befinden sich die Flaschenzugrollen 18 und 19, die der Zugriemen umläuft. Bei der hier dargestellten Konstruktion und Ausführung legt sich je nach Drehung des Rotorblattes bzw. des Rotorschaft der Zugriemen 9 nach Umlaufen der jeweiligen Umlenk- bzw. Flaschenzugrolle dann an das entsprechend mit einer kreisförmigen Anlagefläche versehenen Rotorblatt 21 an.

Bei der hier vorhandenen Kinetik "zieht" also der Zugriemen an der jeweiligen Umlenk- bzw. Flaschenzugrolle und dreht damit den Schaft des Rotorblatts.

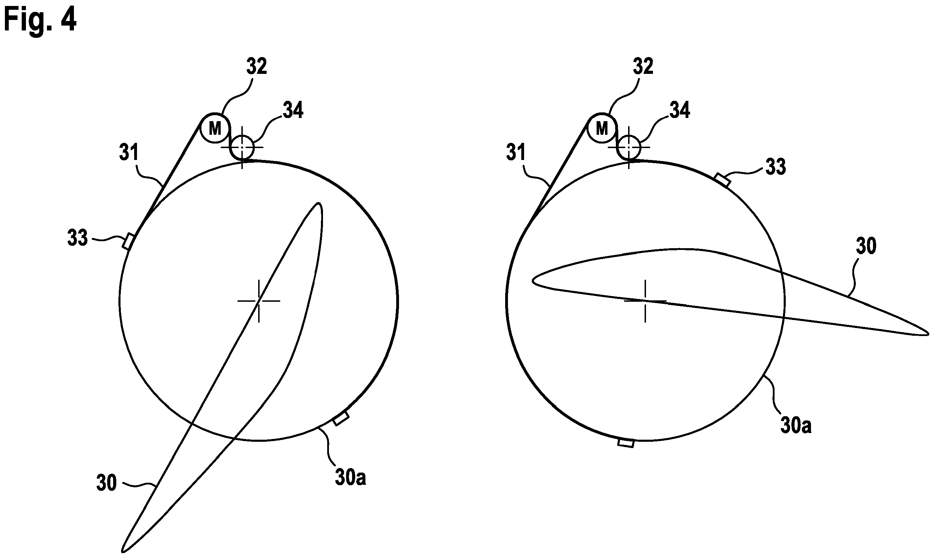

Zum Schluss und zum Vergleich zeigt Fig. 4 prinzipiell eine herkömmliche Rotorblattverstellung aus dem Stand der Technik. Die Verstellung des drehbar gelagerten Rotorblattes 30 erfolgt dort durch einen Zahnriementrieb, bei dem ein Zahnriemen 31 einerseits in eine mit einem Motor M verbundene Antriebsscheibe 32 kämmend eingreift und andererseits in einen am Schaft 30a des Rotorblattes 30 angreift, üblicherweise an einer hier nicht im Detail dargestellten verzahnten Spannplatte. Die Antriebsscheibe ist mit einer zum Zahnriemen komplementären Verzahnung versehen. Der Zahnriemen umschlingt die Antriebsscheibe um einen Teil des jeweiligen Außenumfangs und ist an seinen Enden mit jeweils einer Klemmung 33 auf dem Rotorschaft befestigt. Die Zugkräfte und das übertragbare Drehmoment einer solchen Verstelleinrichtung mit Zahnriemen sind begrenzt und wesentlich niedriger als die bei der erfindungsgemäßen Ausbildung übertragbaren Kräfte. Der Zahnriemen 31 umläuft mit seinem Rücken auch eine als Rückenrolle ausgebildete Umlenkrolle 34, die gleichzeitig als Spannrolle dient. Somit bilden hier Zahnriemen 31, Antriebsscheibe 32, Umlenkrolle 34 und der Schaft mit Spannplatte diesen Zahnriementrieb aus dem Stand der Technik, mit dem das Rotorblatt um seine Längsachse gedreht/verstellt wird.

### Bezugszeichenliste

### (Teil der Beschreibung)

- 1: Windkraftanlage
- 2: Turm der Windkraftanlage
- 3: Generatorgehäuse
- 4: Verstellbares Rotorblatt
- 4a: Schaft des Rotorblattes
- 5: Verstellbares Rotorblatt
- 6: Verstellbares Rotorblatt
- 7: Nabe
- 8: Rotorblattlängsachse
- 9: Zugriemen
- 9a, 9b: Teil des Zugriementrums
- 10: Antriebsscheibe
- 11: Umschlingung Antriebsscheibe/ Teilumfang
- 12: Umschlingung Rotorschaft/ Teilumfang
- 13: Wind, Windrichtung
- 14: Flaschenzugrolle
- 15: Flaschenzugrolle
- 16: Klemmung
- 17: Umlenk- und Spannrolle
- 18: Umlenk- und Flaschenzugrolle
- 19: Umlenk- und Flaschenzugrolle
- 20: Klemmung
- 21: Feststehende Achse des Rotorblattes /-schaftes
- 22: Gleitschiene, mitdrehend mit Rotorblatt

- 30: Rotorblatt
- 30a: Schaft des Rotorblattes
- 31: Zahnriemen
- 32: Antriebsscheibe
- 33: Klemmung
- 34: Rückenrolle / Umlenkrolle

## Patentansprüche

1. Einrichtung zur Rotorblattverstellung an einer Windkraftanlage (1), bei der die Verstellung eines drehbar gelagerten Rotorblattes (4, 5, 6) über einen Zugriementrieb erfolgt, bei dem ein einteiliger Zugriemen (9) mindestens eine mit einem Antriebsmotor verbundene Antriebsscheibe (10) umschlingt und mit dem Fuß bzw. Schaft des Rotorblattes (4a) so in einer Wirkverbindung steht, dass ein zur Verstellung des Rotorblattes erforderliches Drehmoment vom Antriebsmotor auf den Schaft und damit auf das Rotorblatt übertragbar ist, **dadurch gekennzeichnet, dass** der Zugriemen (9) zwischen dem Umschlingungsbereich (11) an der Antriebsscheibe (10) und seiner Wirkverbindung mit dem Fuß bzw. Schaft des Rotorblattes (4a) in Form eines Flaschenzugs über Flaschenzugsrollen (18, 19) geführt und als Endlosriemen ausgebildet an einem feststehenden und nicht mit dem Rotorblatt oder dem Schaft drehbaren Teil der Rotorblattlagerung bzw. Rotornabe befestigt ist.

2. Einrichtung nach Anspruch 1, bei der mindestens eine der Flaschenzugsrollen (18, 19) im bzw. am Fuß oder Schaft des Rotorblattes (4a) gelagert ist.

3. Einrichtung nach Anspruch 1 oder 2, bei der die Wirkverbindung zwischen Zugriemen (9) und Fuß bzw. Schaft des Rotorblattes (4a) dadurch ausgebildet ist, dass der Zugriemen im Schaft drehbar gelagerte Rollen (18, 19) umläuft und ein Drehmoment über die Rollenachse auf den Schaft überträgt.

4. Einrichtung nach Anspruch 3, bei der der Zugriemen zwischen den im Schaft drehbar gelagerten Rollen (18, 19) durch eine mit dem Rotorblatt bzw, mit dem Schaft des Rotorblatts drehbare Gleitschiene (22) abgestützt ist.

5. Einrichtung nach einem oder mehreren der vorhergehenden Ansprüche, bei der der Zugriemen (9) als Zahnriemen ausgebildet ist und mit der Zahnung in eine entsprechend komplementär ausgebildete Antriebsscheibe eingreift.

6. Einrichtung nach einem oder mehreren der vorhergehenden Ansprüche, bei der der Zugriemen (9) als Flachriemen oder als mindestens einseitig profilierter Flachriemen ausgebildet ist, der die Antriebsscheibe (10) reibschlüssig umschlingt.

7. Einrichtung nach einem oder mehreren der vorhergehenden Ansprüche, bei der die eine Flaschenzugsrolle (18,19) (14, umlaufenden im Flaschenzug gegenläufigen Teile des Zugriemens durch Abstandshalter getrennt werden, vorzugweise durch Gleitschienen oder Rollen, an denen die gegenüber liegenden Seiten des Zugriemens gegenläufig bewegbar anliegen.

8. Einrichtung nach einem oder mehreren der vorhergehenden Ansprüche, bei der der Zugriemen mindestens einseitig mit einer gleitfähigen Auflage versehen ist.

9. Einrichtung nach Anspruch 8, bei der der Zugriemen einseitig eine Gewebelage als gleitfähige Auflage aufweist, vorzugsweise eine mit einer Polyethylenfolie beschichtete Gewebelage.

## Claims

1. Device for rotor blade adjustment at a wind turbine (1), in which the adjustment of a rotatably mounted rotor blade (4, 5, 6) is realized via a traction belt drive in which a one-part traction belt (9) winds around at least one drive pulley (10), which is connected to a drive motor, and is operatively connected to the root or shaft of the rotor blade (4a) in such a way that a torque required for adjusting the rotor blade can be transmitted from the drive motor to the shaft, and thus to the rotor blade, **characterized in that**
the traction belt (9) is, between the wind-around region (11) on the drive pulley (10) and its operative connection to the root or shaft of the rotor blade (4a), guided in the form of a block and tackle over block-and-tackle pulleys (18, 19), and is fastened, in the form of an endless belt, to a fixed part of the rotor blade bearing or rotor hub, which part does not rotate with the rotor blade or the shaft.

2. Device according to Claim 1, in which at least one of the block-and-tackle pulleys (18, 19) is mounted in or on the root or shaft of the rotor blade (4a).

3. Device according to Claim 1 or 2, in which the operative connection between the traction belt (9) and the root or shaft of the rotor blade (4a) is formed in that the traction belt runs around pulleys (18, 19) mounted rotatably in the shaft and transmits a torque to the shaft via the pulley axle.

4. Device according to Claim 3, in which the traction belt is supported between the pulleys (18, 19) mounted rotatably in the shaft by a sliding rail (22), which is rotatable with the rotor blade or with the shaft of the rotor blade.

5. Device according to one or more of the preceding claims, in which the traction belt (9) is in the form of a toothed belt and engages, by way of the toothing, into a correspondingly complementarily formed drive pulley.

6. Device according to one or more of the preceding claims, in which the traction belt (9) is in the form of a flat belt or in the form of a flat belt profiled at least on one side, which winds around the drive pulley (10) with frictional engagement.

7. Device according to one or more of the preceding claims, in which those parts of the traction belt which run around one block-and-tackle pulley (18, 19) and run in opposite directions in the block and tackle are separated by spacers, preferably by sliding rails or rollers, against which the opposite sides of the traction belt bear so as to be movable in opposite directions.

8. Device according to one or more of the preceding claims, in which the traction belt is provided at least on one side with a slidable overlay.

9. Device according to Claim 8, in which the traction belt has on one side, as a slidable overlay, a fabric layer, preferably a fabric layer coated with a polyethylene film.

## Revendications

1. Dispositif de réglage d'une pale de rotor sur une éolienne (1), dans lequel le réglage d'une pale de rotor supportée à rotation (4, 5, 6) s'effectue par un entraînement par courroie de traction, dans lequel une courroie de traction d'une seule pièce (9) enveloppe au moins une poulie d'entraînement (10) connectée à un moteur d'entraînement et est en liaison fonctionnelle avec la base ou l'arbre de la pale de rotor (4a) de telle sorte qu'un couple nécessaire pour le réglage de la pale de rotor puisse être transmis du moteur d'entraînement à l'arbre et par conséquent à la pale de rotor, **caractérisé en ce que**
la courroie de traction (9) est guidée entre la région d'enveloppement (11) au niveau de la poulie d'entraînement (10) et sa liaison fonctionnelle avec la base ou l'arbre de la pale de rotor (4a) à la manière d'un palan par le biais de poulies de palan (18, 19) et, réalisée en tant que courroie sans fin, est fixée à une partie du support sur palier de la pale de rotor ou du moyeu de rotor qui est fixe et ne tourne pas avec la pale de rotor ou avec l'arbre.

2. Dispositif selon la revendication 1, dans lequel au moins l'une des poulies de palan (18, 19) est supportée dans ou sur la base ou l'arbre de la pale de rotor (4a).

3. Dispositif selon la revendication 1 ou 2,
dans lequel la liaison fonctionnelle entre la courroie de traction (9) et la base ou l'arbre de la pale de rotor (4a) est réalisée par le fait que la courroie de traction tourne autour de poulies (18, 19) supportées à rotation dans l'arbre et transfère un couple par le biais de l'axe de poulie à l'arbre.

4. Dispositif selon la revendication 3,
dans lequel la courroie de traction entre les poulies (18, 19) supportées à rotation dans l'arbre est supportée par un rail de glissement (22) pouvant tourner avec la pale de rotor ou avec l'arbre de la pale de rotor.

5. Dispositif selon l'une quelconque ou plusieurs des revendications précédentes, dans lequel la courroie de traction (9) est réalisée sous forme de courroie dentée et s'engage avec la denture dans une poulie d'entraînement réalisée de manière complémentaire correspondante.

6. Dispositif selon l'une quelconque ou plusieurs des revendications précédentes, dans lequel la courroie de traction (9) est réalisée sous forme de courroie plate ou sous forme de courroie plate profilée au moins d'un côté, qui enveloppe avec engagement par friction la poulie d'entraînement (10).

7. Dispositif selon l'une quelconque ou plusieurs des revendications précédentes, dans lequel les parties de la courroie de traction enveloppant une poulie de palan (18, 19) et circulant en sens inverse dans le palan sont séparées par des éléments d'espacement, de préférence par des rails de glissement ou des rouleaux, sur lesquels les côtés opposés de la courroie de traction s'appliquent de manière déplaçable en sens inverse.

8. Dispositif selon l'une quelconque ou plusieurs des revendications précédentes, dans lequel la courroie de traction est pourvue au moins d'un côté d'un appui glissant.

9. Dispositif selon la revendication 8,
dans lequel la courroie de traction présente d'un côté une couche de tissu en tant qu'appui glissant, de préférence une couche de tissu revêtue d'un film de polyéthylène.
